# EUROPÄISCHE PATENTSCHRIFT

(11) **EP 2 533 503 B1**
(45) Veröffentlichungstag und Bekanntmachung des Hinweises auf die Patenterteilung: **12.11.2014**
(21) Anmeldenummer: 12169152.1
(22) Anmeldetag: 23.05.2012
(51) Int. Cl.: H04M 1/02, H04M 11/02, H04N 7/18

(54) **Kommunikationsverfahren für eine Telekommunikationsanlage, inbesondere für eine Hauskommunikationsanlage, und eine Hauskommunikationsanlage**
Communication method for a telecommunications assembly, in particular for a domestic intercom system, and a domestic intercom system
Procédé de communication pour installation de télécommunication, en particulier pour une installation de communication domestique et une installation de communication domestique

(30) Priorität: 06.06.2011 DE 102011076998
(43) Veröffentlichungstag der Anmeldung: 12.12.2012
(73) Patentinhaber: S. Siedle & Söhne Telefon- und Telegrafenwerke OHG, 78120 Furtwangen (DE)
(72) Erfinder: Reitinger, Andreas, 78120 Furtwangen (DE)
(74) Vertreter: Isarpatent

(56) Entgegenhaltungen:
- WO-A1-2006/067782
- US-A1- 2005 281 208
- US-A1- 2010 197 218
- US-B1- 6 754 224

## Beschreibung

Die vorliegende Erfindung betrifft ein Kommunikationsverfahren für eine Telekommunikationsanlage, insbesondere für eine Hauskommunikationsanlage, und eine Hauskommunikationsanlage.

### TECHNISCHER HINTERGRUND

Die vorliegende Erfindung bezieht sich auf das Gebiet der Hauskommunikation als Teil der Hausautomatisierung. Während bei der Gebäudeautomatisierung von öffentlichen Gebäuden, Industriegebäuden und dergleichen die damit erzielbaren Nutzen im Vordergrund stehen, sind dies bei der Hausautomatisierung der erhöhte Wohnkomfort, die Sicherheit der Bewohner und dergleichen. Die Hausautomatisierung befindet sich im das Umfeld des intelligenten Wohnens, welches Lösungen im privaten oder geschäftlichen Wohn- und Arbeitsbereich bezeichnet, die auf die speziellen Bedürfnisse der Bewohner von privaten Wohnhäusern, Wohnblocks oder Geschäftshäuser ausgerichtet ist, bei denen Geräte, Systeme und Technologien eingesetzt werden, die mehr Effizienz, Komfort, Wirtschaftlichkeit, Flexibilität und Sicherheit schaffen.

Die Druckschrift WO 2006/067782 offenbart ein Hauskommunikationssystem, in welches ein Mobiltelefon eingebunden werden kann.

Die Druckschrift US 2010/0197218 A1 offenbart ein Hauskommunikationssystem mit Audio- und Videoendgeräten.

Die Druckschrift US 2005/0281208 A1 offenbart ein Verfahren zur Sitzungskontrolle im Multicast-betrieb eines Netzwerks.

Die Druckschrift US 6,754,224 B1 offenbart ein Verfahren zum Signalisieren eines Anrufs über Multicast-Datenpakete.

Ein Aspekt der Hausautomatisierung bezieht sich auf die Hauskommunikation mittels entsprechender Teilnehmerendgeräte oder Sprechanlagen. Eine Hauskommunikationsanlage umfasst typischerweise eine Vielzahl von verschiedenen Teilnehmerendgeräten, die miteinander über ein Verbindungsnetzwerk, wie z.B. ein KNX-Bussystem, gekoppelt sind. Darüber hinaus weist eine Hauskommunikationsanlage auch zumindest eine Türsprechanlage auf, die vor oder unmittelbar an der Tür angebracht ist, und über welche Besucher mit Hausbewohnern in kommunikative Verbindung treten können. Derartige Hauskommunikationsanlagen sind allgemein bekannt, so dass darauf nicht näher eingegangen werden muss.

In der Deutschen Patentanmeldung DE 196 20 363 A1 ist eine Vorrichtung für eine Türsprech- und Videoanlage für mehrere Teilnehmer einer Hauskommunikationsanlage beschrieben. Ebenfalls dort beschrieben ist eine Mithör- und Mitsehsperreinrichtung für die Türsprech- und Videoanlage, die zum Beispiel durch Invertierung des Bildes und des Tones, Veränderung der Synchronimpulse, schaltbare Kanalsperre in den Steuereinheiten der Teilnehmer, Übertragung des Tones im Rückkanal und dergleichen implementiert sein kann.

Bei modernen Hauskommunikationsanlagen sind die verschiedenen Teilnehmerendgeräte, beispielsweise die Haustelefone, Freisprechanlagen, Türsprechanlagen und dergleichen, an demselben Busnetzwerk angeschlossen. Dadurch ergibt sich die Aufgabenstellung, dass im Falle einer Kommunikation zwischen zwei Teilnehmerendgeräten, beispielsweise zwischen der Türsprechanlage und einem Haustelefon, andere Teilnehmerendgeräte, die über die Türsprechanlage gerade nicht angesprochen werden sollen, auch nicht mithören bzw. mitsehen können. Moderne Hauskommunikationsanlagen umfassen daher üblicherweise eine Vorrichtung zur Mithör- und/oder Mitsehsperre. Im einfachsten Falle können diese Mithör- oder Mitsehsperreinrichtungen bei Hauskommunikationsanlagen durch eine Punkt-zu-Punkt-Verbindung zwischen dem Türsprechgerät und den verschiedenen Teilnehmerendgeräten ausgebildet sein. Dadurch wird zwar eine sehr sichere Mithör- und Mitsperreinrichtung bereit gestellt. Allerdings ist diese aufgrund der Punkt-zu-Punkt-Verbindung nicht besonders flexibel. Zudem ist diese Mithör- bzw. Mitsperreinrichtung vor allem bei großen Gebäuden mit einer Vielzahl von Teilnehmerendgeräten aufgrund des dafür erforderlichen Verkabelungsaufwandes außerordentlich komplex und aufwändig.

Moderne Hauskommunikationsanlagen weisen typischerweise eine Vielzahl voneinander unabhängiger Teilnehmergruppen auf, wie etwa Wohneinheiten und Büroeinheiten, denen wiederum eine Vielzahl von Teilnehmerendgeräten, wie zum Beispiel Haustelefonen, Freisprechanlagen, Türsprechanlagen, Kameras, etc., zugeordnet sind. Sofern innerhalb einer derartigen Wohn- oder Büroeinheit eine Vielzahl verschiedener Haustelefone oder Bildtelefone vorgesehen sind, ist es zweckmäßig, dass eine Rufanfrage von der externen Türsprechanlage möglichst an alle Teilnehmerendgeräte derselben Wohn- bzw. Büroeinheit weitergeleitet wird. Dies ist aus Komfortgründen wünschenswert, da auf diese Weise ein Bewohner der Wohn- bzw. Büroeinheit diese Rufanfrage von einem beliebigen Teilnehmerendgerät, beispielsweise einem nächst gelegenen Teilnehmerendgerät, annehmen kann. Viele Hauskommunikationsanlagen stellen diese, aus Komfortgründen bevorzugte Betriebsweise nicht zur Verfügung. Im Falle einer Punkt-zu-Punkt-Verbindung zwischen Türsprechanlage und den diversen Teilnehmerendgeräten gestaltet sich eine solche Funktionalität als sehr aufwändig und steuertechnisch als sehr komplex.

Problematisch ist ferner, dass bei einem Ansprechen sämtlicher Teilnehmerendgeräte einer Wohn- bzw. Büroeinheit auch sämtliche andere Teilnehmerendgeräte diese Kommunikation mithören können. Im Falle einer mit Kamera ausgestatteten Türsprechanlage kann jedes mit einem Display ausgestattetes Teilnehmerendgeräte derselben Wohn- bzw. Büroeinheit dieselbe Videosequenz empfangen. Dies ist ein Zustand, den es bei modernen Hauskommunikationsanlagen zu vermeiden gilt.

### ZUSAMMENFASSUNG DER ERFINDUNG

Vor diesem Hintergrund ist es eine Aufgabe der vorliegenden Erfindung, eine moderne Hauskommunikationsanlage bereitzustellen, welche sehr komfortabel ist und welche zudem sehr sicher gegen ein unerwünschtes Mithören oder Mitsehen ist.

Erfindungsgemäß wird diese Aufgabe durch ein Verfahren mit den Merkmalen des Patentanspruchs 1 und durch eine Hauskommunikationsanlage mit den Merkmalen des Patentanspruchs 10 gelöst.

Die der vorliegenden Erfindung zugrunde liegende Erkenntnis besteht darin, dass bei einer modernen Hauskommunikationsanlage die verschiedenen Teilnehmerendgeräte, die verschiedenen Teilnehmergruppen zugeordnet sein können, aus Komfortgründen jeweils an demselben Busnetzwerk angekoppelt sind und damit grundsätzlich den über das Busnetzwerk transportierten Datenstrom aufnehmen können. Die Idee der vorliegenden Erfindung besteht nun darin, eine von einem Teilnehmerendgerät gesendete Rufanfrage in Form einer IP-adressbasierten Rufanfrage an die durch die Rufanfrage angesprochene Teilnehmergruppe weiterzuleiten. Die IP-adressbasierte Weiterleitung der Rufanfrage ist sehr komfortabel und erlaubt eine sehr sichere Kommunikationsverbindung zwischen Teilnehmerendgeräten einer Hauskommunikationsanlage. Dies ist insbesondere von Vorteil, wenn die Rufanfrage verknüpft ist mit Audio- und/oder Videodaten, beispielsweise wenn die Rufanfrage von einem als Türsprechgerät mit integrierter Kamera ausgebildeten Teilnehmerendgerät gesendet wird.

Bei allgemein bekannten Lösungen können und werden solche Rufanfragen stets an dezidierte, vorher fest vorgegebene Teilnehmerendgeräte gesendet, beispielsweise mittels einer Punkt-zu-Punkt-Verbindung. Mittels des erfindungsgemäßen Verfahrens unter Verwendung der IP-adressbasierten Rufanfrage können auf diese Weise die verschiedenen Teilnehmerendgeräte einer gesamten Teilnehmergruppe sehr sicher mit der Rufanfrage angesprochen werden. Dies ermöglicht einen erheblichen Komfortzugewinn unter Beibehaltung einer größtmöglichen Sicherheit, da auch nur diejenigen Teilnehmerendgeräte angesprochen werden, welche einer jeweiligen Teilnehmergruppe zugeordnet sind. Auf diese Weise ergibt sich ein hoher Komfort und zusätzlich eine sehr gute Mitseh- und Mithörsperrfunktionalität.

In der vorliegenden Patentanmeldung wird als Rufteilnehmer dasjenige Teilnehmerendgerät bezeichnet, welches eine Rufanfrage zu einem Teilnehmerendgerät oder einer Teilnehmergruppe initiiert.

Vorteilhafte Ausgestaltungen und Weiterbildungen ergeben sich aus den weiteren Unteransprüchen sowie aus der Beschreibung unter Bezugnahme auf die Figuren der Zeichnung.

In einer bevorzugten Ausgestaltung weisen verschiedene Teilnehmerendgeräte und/oder die Teilnehmergruppen jeweils eine dem jeweiligen Teilnehmerendgerät bzw. der jeweiligen Teilnehmergruppe eindeutig zugeordnete IP-Adresse auf. Auf diese Weise kann ein spezielles Teilnehmerendgerät oder eine gesamte Teilnehmergruppe von dem Rufteilnehmer bzw. der die Rufanfrage weiterleitende Steuereinrichtung durch Angabe einer speziellen IP-Adresse gezielt angesprochen werden. Eine IP-Adresse bezeichnet eine Adresse in einem Computernetzwerk, die - wie zum Beispiel das Internet - auf einem so genannten Internetprotokoll (IP) basiert. IP-Adressen werden im Allgemeinen verwendet, um Daten von ihrem Absender zu einem vorgesehenen Empfänger transportieren zu können. Die IP-Adresse wird solchen Geräten oder Teilnehmerendgeräten zugewiesen, welche an das IP-basierte Computernetz angebunden sind, und macht auf diese Weise die Teilnehmerendgeräte adressierbar. Eine IP-Adresse kann einen einzelnen Empfänger, das heißt ein einzelnes Teilnehmerendgerät, oder eine gesamte Gruppe von Teilnehmerendgeräten bezeichnen. Darüber hinaus wäre auch denkbar, dass einem Teilnehmerendgerät mehrere IP-Adressen zugeordnet sind. Die IP-Adressen können basieren auf dem derzeitigen IP-V4 Standard oder einem zukünftigen Standard, wie etwa IP-V6, basieren.

In einer typischen Ausgestaltung erfolgt das Senden der Rufanfrage durch den Rufteilnehmer an die Steuereinrichtung im Unicast. In der Telekommunikation bezeichnet Unicast die Übertragung von Nachrichten zwischen einem einzigen sendenden Teilnehmerendgerät, hier als Rufteilnehmer bezeichnet, zu einem einzelnen empfangenden Teilnehmerendgerät. Die dazu verwendete Adresse, die das Ziel eindeutig identifiziert, wird meist als Unicast-Adresse bezeichnet.

Ebenfalls vorteilhaft wäre es, wenn das Senden der Rufanfrage durch den Rufteilnehmer im Multicast an die Steuereinrichtung gesendet wird. Multicast bezeichnet in der Telekommunikation eine Nachrichtenübertragung von einem Punkt zu einer Gruppe, auch Mehrpunktverbindung genannt. Im Kontext der vorliegenden Patentanmeldung bezeichnet Multicast die Nachrichtenübertragung von einem Teilnehmerendgerät zu einer Gruppe an Teilnehmerendgeräten. Der Vorteil bei Multicast besteht darin, dass gleichzeitig Nachrichten an mehrere Teilnehmerendgeräte oder an eine geschlossene Teilnehmergruppe übertragen werden können, ohne dass sich beim sendenden Teilnehmerendgerät, also beim Rufteilnehmer, die Bandbreite mit der Zahl der Empfänger multipliziert. Multicast ist die übliche Bezeichnung für IP-Multicast, welches es ermöglicht, in IP-basierten Netzwerken effizient Datenpakete an viele Empfänger, beispielsweise den Teilnehmer einer gesamten Teilnehmergruppe, zur gleichen Zeit zu senden. Dies geschieht mit einer speziellen so genannten Multicast-Adresse, die eine IP-basierte Adresse darstellt. Multicast wird meist im Zusammenhang mit Audio- und Videodatenübertragung genannt. Diese nutzen Protokolle wie das RTP (RTP = Routing Information Protocol). Unicast und Multicast werden als Klassifikation der Adressierung und damit als Routingmethoden in Kommunikationsnetzwerken verwendet.

Zusätzlich oder alternativ ist es vorteilhaft, wenn das Weiterleiten der Rufanfrage von der Steuereinrichtung an die Teilnehmerendgeräte der jeweils adressierten Teilnehmergruppe im Multicast erfolgt. Das Weiterleiten der Rufanfrage von der Steuereinrichtung im Multicast erfolgt dadurch, dass eine Rufanfrage von der Steuereinrichtung für alle Teilnehmergruppen im Multicast zugänglich ist und im Multicast ausgesendet wird, wobei lediglich die Teilnehmer der adressierten Teilnehmergruppe über eine der adressierten Teilnehmergruppe zugeordnete IP-Adresse angesprochen werden. Auf diese Weise sind zwar sämtliche Teilnehmerendgeräte bzw. sämtliche Teilnehmergruppen über das Busnetzwerk mit der Steuereinrichtung verbunden und können damit prinzipiell den von der Steuereinrichtung weitergeleiteten Datenstrom aufnehmen. Allerdings ist nur die adressierte Teilnehmergruppe bzw. deren Teilnehmerendgeräte aufgrund der IP-Adresse in der Lage, den entsprechenden Datenstrom zu lesen und eine bidirektionale Datenkommunikation mit dem Rufteilnehmer aufzubauen. Dadurch ergibt sich eine sehr sichere Datenkommunikation zwischen dem Rufteilnehmer und der adressierten Teilnehmergruppe bzw. deren Teilnehmerendgeräten.

In einer Ausgestaltung ist eine implizite Mitsehsperre vorgesehen. Die implizite Mitsehsperre sieht vor, dass im Falle einer Rufanfrage an eine spezielle, adressierte Teilnehmergruppe sämtliche Teilnehmerendgeräte dieser adressierten Teilnehmergruppe einen entsprechenden Datenstrom erhalten. Dieser Datenstrom kann neben Audiodaten auch Videodaten enthalten, das heißt beispielsweise im Falle eines als Videotürsprechgerätes ausgebildeter Rufteilnehmer auch eine entsprechende Videosequenz. Die implizite Mitsehsperre sieht nun vor, dass beim Aufbauen einer mitsehgeschützten Kommunikationsverbindung zwischen dem Rufteilnehmer und dem ersten Teilnehmerendgerät der adressierten Teilnehmergruppe ein gleichzeitiges Umschalten der zwischen dem Rufteilnehmer und dem ersten Teilnehmerendgerät aufgebauten Kommunikationsverbindung von dem vorhandenen Multicast in den Unicast umfasst. Dieses Umschalten erfolgt gleichzeitig, das heißt sobald das erste Teilnehmerendgerät die Rufanfrage angenommen hat. Nach dem Umschalten ist somit nur noch das erste Teilnehmerendgerät der adressierten Teilnehmergruppe in der Lage, den von dem Rufteilnehmer ausgesendeten Datenstrom zu empfangen und einen entsprechenden Datenstrom an den Rufteilnehmer zurückzusenden. Es findet anschließend eine sehr sichere Unicast-Kommunikation lediglich zwischen dem ersten Teilnehmerendgerät und dem Rufteilnehmer statt. Andere Teilnehmerendgeräte anderer Teilnehmergruppen oder auch der adressierten Teilnehmergruppe können nicht an dieser Datenkommunikation partizipieren. Damit ist eine sehr sichere, jedoch nichtsdestotrotz sehr komfortable Datenkommunikation realisiert.

In einer ebenfalls bevorzugten alternativen Ausgestaltung ist eine aktive Mitsehsperre vorgesehen. Bei der aktiven Mitsehsperre wird durch die Steuereinrichtung beim Aufbauen einer mitseh- bzw. mithörgeschützten Kommunikationsverbindung eine neue IP-Adresse vergeben. Diese neue IP-Adresse wird dem von dem Rufteilnehmer angesprochenen ersten Teilnehmerendgerät und/oder der adressierten Teilnehmergruppe zugeordnet. Die IP-Adresse kann beispielsweise aus einer Liste an bekannten, nur der Steuereinrichtung zugänglichen IP-Adressen ausgewählt und für eine jeweilige Datenkommunikation mit einer adressierten Teilnehmergruppe verwendet werden. Da diese IP-Adresse im Falle des Aufbauens einer neuen Kommunikationsverbindung immer wieder neu generiert wird, ergibt sich hier eine sehr effektive und sehr sichere Möglichkeit einer mitseh- und mithörgeschützten Kommunikationsverbindung zwischen zwei Teilnehmerendgeräten. Dadurch werden insbesondere sämtliche anderen Teilnehmerendgeräte, denen eben keine solche IP-Adresse zugeteilt wird, aus dieser Kommunikationsverbindung ausgesperrt.

In einer bevorzugten Ausgestaltung wird die Kommunikationsverbindung zwischen Rufteilnehmer und erstem Teilnehmerendgerät stets im Unicast betrieben, sofern das von dem Rufteilnehmer angesprochene erste Teilnehmerendgerät eine Türsprechanlage ist. In diesem Falle ist es sinnvoll, wenn lediglich zwischen dem als Rufteilnehmer ausgebildeten Teilnehmerendgerät und der adressierten Türsprechanlage eine sehr sichere Unicast-Datenverbindung aufgebaut wird, um zu verhindern, dass nicht andere Teilnehmerendgeräte der Hauskommunikationsanlage an dieser Kommunikationsverbindung partizipieren. In diesem Falle ist der Rufteilnehmer typischerweise ein Teilnehmerendgerät einer Teilnehmergruppe.

In einer weiteren Ausgestaltung der Erfindung wird gleichzeitig oder nach dem Aufbauen der Kommunikationsverbindung zwischen dem Rufteilnehmer und dem ersten Teilnehmerendgerät der adressierten Teilnehmergruppe zumindest eine weitere Kommunikationsverbindung zwischen zumindest dem Rufteilnehmer und einem anderen Teilnehmerendgerät derselben adressierten Teilnehmergruppe aufgebaut. Diese weitere Kommunikationsverbindung wird lediglich im Empfangsmodus betrieben, so dass zumindest ein anderes Teilnehmerendgerät derselben adressierten Teilnehmergruppe die zwischen dem Rufteilnehmer und dem ersten Teilnehmerendgerät ausgetauschten Daten empfangen und damit mithören und mitsehen kann, allerdings keine Sprach- bzw. Videodaten an diese senden kann. Dadurch ist es möglich, weitere Teilnehmerendgeräte derselben adressierten Teilnehmergruppe in einem so genannten passiven Mithör- oder Mitsehbetrieb zu betreiben, das heißt diese nehmen Kenntnis von der Datenkommunikation zwischen dem Rufteilnehmer und dem adressierten ersten Teilnehmerendgerät, ohne in diese Kommunikationsverbindung eingreifen zu können.

In einer anderen, besonders bevorzugten Ausgestaltung wird nach dem Aufbauen der Kommunikationsverbindung zwischen dem Rufteilnehmer und dem ersten Teilnehmerendgerät die Ausbildung weiterer Kommunikationsverbindungen geblockt. Damit werden nicht nur die Teilnehmerendgeräte anderer Teilnehmergruppen, sondern eben auch die Teilnehmerendgeräte derselben Teilnehmergruppe von der Datenkommunikation des ersten Teilnehmerendgerätes mit dem Rufteilnehmer ausgeschlossen. Dies kann für viele Anwendungen sinnvoll sein, insbesondere im privaten Bereich zur Wahrung der Privatsphäre oder etwa auch im geschäftlichen Bereich.

In einer typischen Ausgestaltung ist die Rufanfrage eine akustische und/oder visuelle Rufanfrage. Sofern der Rufteilnehmer als audiovisuelles Teilnehmerendgerät, beispielsweise als Türsprechanlage mit integrierter Kamera, ausgebildet ist, lassen sich von diesem Rufteilnehmer eine bloße Rufanfrage in Form eines Klingeltons zusammen mit einer akustischen Nachricht und einer Videosequenz, die zum Beispiel dem von der Kamera aufgenommenen Bild entspricht, an die adressierte Teilnehmergruppe bzw. das erste Teilnehmerendgerät senden. Je nachdem, ob der von dem Rufteilnehmer gesendete Datenstrom ein Audiodatenstrom und/oder ein Videodatenstrom ist, wird durch das erfindungsgemäße Verfahren eine Mithör- und/oder Mitsehsperre realisiert.

In einer typischen Ausgestaltung der erfindungsgemäßen Hauskommunikationsanlage ist zumindest ein Teilnehmerendgerät als Haustelefon, insbesondere als Videohaustelefon mit integrierter Kamera, ausgebildet. Denkbar wäre auch die Ausgestaltung eines Teilnehmerendgerätes als Sprechanlage, insbesondere als Videofreisprechanlage, Etagentürsprechanlage und/oder als virtuelles Videohaustelefon.

In einer typischen Ausgestaltung ist der Rufteilnehmer eine Türsprechanlage, insbesondere eine Videotürsprechanlage mit integrierter Kamera.

In einer weiteren typischen Ausgestaltung ist als Kommunikationsnetzwerk ein so genanntes WLAN-Netzwerk, WAN-Netzwerk, MAN-Netzwerk oder LAN-Netzwerk vorgesehen. Darüber hinaus ist die Erfindung allerdings nicht darauf beschränkt, sondern lässt sich auch bei beliebig anderen Netzwerken vorteilhaft einsetzen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer erfindungsgemäßen Hauskommunikationsanlage;
- Fig. 2: ein Ablaufdiagramm eines erfindungsgemäßen Kommunikationsverfahren für eine Hauskommunikationsanlage.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

### BESCHREIBUNG VON AUSFÜHRUNGSBEISPIELEN

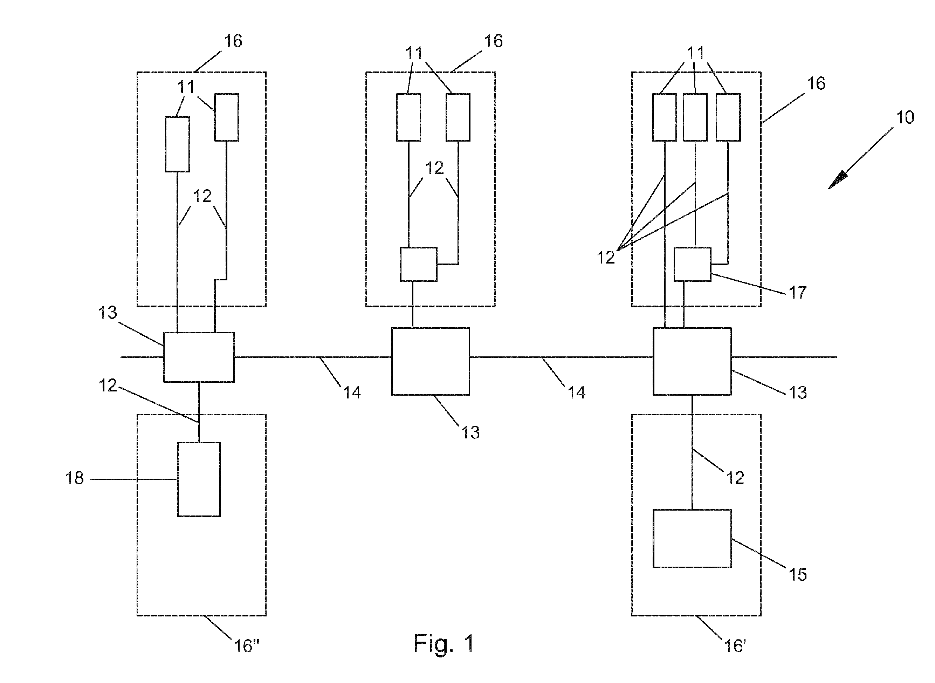

Fig. 1 zeigt ein Blockschaltbild einer erfindungsgemäßen Telekommunikationsanlage, die hier als Hauskommunikationsanlage 10 ausgebildet ist. Die Hauskommunikationsanlage 10 weist eine Vielzahl von Teilnehmerendgeräten 11 auf. Die Teilnehmerendgeräte 11 sind direkt oder mittels Switches 17 oder über andere Teilnehmerendgeräte 11 mit einem Busnetzwerk der Hauskommunikationsanlage 10 gekoppelt. Die Hauskommunikationsanlage 10 weist ferner eine zentrale Steuereinrichtung 15 auf, die ebenfalls über das Busnetzwerk 12, 14 mit den verschiedenen Teilnehmerendgeräten 11 gekoppelt ist. Das Busnetzwerk wird hier durch verschiedene Router 13, Switches 17 und Kommunikationsverbindungen 12, 14 gebildet. Die Verbindungen 12 zwischen den Teilnehmerendgeräten 11 und den Routern 13 sowie die Verbindungen 14 zwischen den verschiedenen Routern 13 können als drahtgebundene oder drahtlose Kommunikationsverbindungen ausgebildet sein. Denkbar wäre ein WLAN, LAN-, MAN-, WAN- oder KNX-Netzwerk oder etwa auch ein gemischtes WLAN/LAN-Netzwerk. Darüber hinaus wären auch andere Netzwerktopologien einsetzbar.

Im Falle einer Hauskommunikationsanlage 10 können verschiedene Teilnehmerendgeräten 11 einer so genannten Teilnehmergruppe 16, nachfolgend auch als Cluster 16 bezeichnet, zugeordnet sein. Die Teilnehmerendgeräte 11 eines jeweiligen Clusters 16 sind über entsprechende Kommunikationsverbindungen 12 direkt oder indirekt, beispielsweise über weitere Router oder andere Teilnehmerendgeräte 11, mit einem diesem Cluster 16 zugeordneten Router 13 verbunden. Ein solches Cluster 16 kann beispielsweise eine Einheit in einem Gebäude sein, beispielsweise eine abtrennbare Wohnung, ein Büro, der Empfang eines Gebäudes oder einer Etage, und dergleichen. Denkbar wäre auch, dass als Cluster 16 einzelne Räume oder Untergruppen innerhalb eines Raums, einer Wohneinheit oder eines Büros vorgesehen sind.

Darüber hinaus ist eines der Cluster 16' dafür vorgesehen, die zentrale Steuereinrichtung 15, beispielsweise den Server 15 des Busnetzwerks, aufzunehmen. Ein weiteres Cluster 16" kann beispielsweise der Eingangsbereich mit der Türsprechanlage 18 samt der darin integral angeordneten Türkamera sein. Sowohl die zentrale Steuereinrichtung 15 als auch die Türsprechanlage 18 fungieren auch als Teilnehmerendgeräte.

Als Teilnehmerendgeräte 12 können beispielsweise vorgesehen sein: ein Haustelefon mit oder ohne Display, ein Etagenruftaster, eine Etagentürsprechanlage ohne oder mit Videokamera, ein Videofreisprechtelefon, eine virtuelles Videohaustelefon, ein Türcontroller, eine analoge Videokamera, eine Türstation, eine Türkamera, ein PC, eine elektronisches Whiteboard und dergleichen.

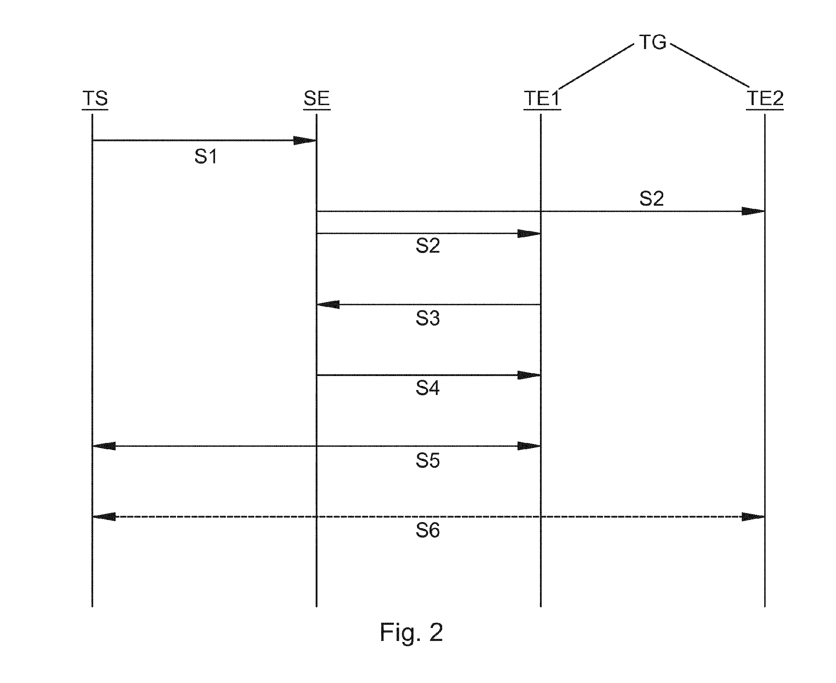

Nachfolgend wird anhand des Ablaufdiagramms in Figur 2 das erfindungsgemäße Verfahren für eine mitseh- bzw. mithörgeschützte Datenkommunikation näher erläutert. Es sei davon ausgegangen, dass eine Datenkommunikation zwischen einem Rufteilnehmer 18, der hier als Türsprechgerät 18 mit integrierter Kamera und Display ausgebildet ist, und einer Teilnehmergruppe 16 innerhalb einer Hauskommunikationsanlage aufgebaut werden soll.

In Figur 2 ist lediglich beispielhaft ein Ablaufdiagramm für eine Datenkommunikation zwischen einem Türsprechgerät TS mittels einer als Server ausgebildeten Steuereinrichtung SE und zweier Teilnehmerendgeräte TE1, TE2 derselben Teilnehmergruppe TG dargestellt. In einem Anfangszustand ist zunächst keine Datenkommunikationsverbindung zwischen den Teilnehmern TS, SE, TE1, TE2 vorhanden.

In einem ersten Schritt S1 wird von einem Besucher z.B. durch Drücken einer Türklingel an der Türsprechanlage TS eine Rufanfrage eingeleitet. Diese Rufanfrage wird vorzugsweise im Unicast von der Türsprechanlage TS zu der Steuereinrichtung SE gesendet.

Die von dem Besucher gedrückte Türklingel ist einer speziellen Teilnehmergruppe TG mit verschiedenen Teilnehmerendgeräten TE1, TE2 zugeordnet. Die Steuereinrichtung SE ordnet diese über die Türklingel initiierte Rufanfrage der entsprechenden Teilnehmergruppe TG zu. Diesen Teilnehmerendgeräten TE1, TE2 der Teilnehmergruppe TG ist eine diesen Teilnehmergeräten spezifische IP-Adresse zugeordnet. Die Steuereinrichtung SE übermittelt die Rufanfrage unter Verwendung der diesen Teilnehmerendgeräten TE1, TE2 spezifischen IP-Adressen im Multicast an die verschiedenen Teilnehmerendgeräte TE1, TE2 der durch die Rufanfrage angesprochenen Teilnehmergruppe TG (Schritt S2). Dadurch wird diese Rufanfrage an die diversen Teilnehmerendgeräte TE1, TE2 der adressierten Teilnehmergruppe TG gleichzeitig übermittelt. Diese Art der im Multicast weitergeleiteten Rufanfragen werden prinzipiell auf dem Kommunikationsbus der Hauskommunikationsanlage übertragen, jedoch erhalten lediglich die über die IP-Adresse von der Steuereinrichtung SE adressierten Teilnehmerendgeräte TE1, TE2 der adressierten Teilnehmergruppe TG Kenntnis über das Vorhandensein einer solchen Rufanfrage, beispielsweise durch einen entsprechenden Klingelton. Diesen Teilnehmerendgeräten TE1, TE2 werden zusammen mit der Rufanfrage zusätzliche Informationen übermittelt, beispielsweise von der in der Türsprechanlage TS integrierten Kamera aufgenommene Bildsequenzen. Diese Informationen, beispielsweise von der Kamera der Türsprechanlage aufgenommene Videosequenzen oder entsprechende Audiosequenzen, sind an jedem der Displays der Teilnehmerendgeräte TE1, TE2 sichtbar.

Ein im Umfeld der Teilnehmergruppe TG befindlicher Benutzer ist nun in der Lage, eines der der adressierten Teilnehmergruppe TG zugeordneten Teilnehmerendgeräte TE1, TE2 auszuwählen, um den Anruf von dort entgegenzunehmen. Beispielsweise nimmt der Benutzer durch Abnehmen des Hörers oder durch Drücken einer entsprechenden Freigabetaste den Anruf über das Teilnehmerendgerät TE1 entgegen. Das Abnehmen des Telefonhörers bzw. das Drücken der Freigabetaste durch den Benutzer des Teilnehmerendgeräts TE1 wird der Steuereinrichtung SE signalisiert (Schritt S3).

Die Steuereinrichtung SE ändert nun den Kommunikationsmodus derart, dass die Kommunikationsverbindung zu dem nichtaktiven Teilnehmerendgerät TE2 unterbrochen wird, so dass das weitere Teilnehmerendgerät TE2 keinerlei Informationen mehr von der Türsprechanlage TS erhält. Lediglich die Kommunikationsverbindung zu dem ersten Teilnehmerendgerät TE, welches durch Abnehmen des Hörers bzw. Drücken der Freigabetaste aktiviert wurde, bleibt aufrecht erhalten. Ferner wechselt die Steuereinrichtung SE die Kommunikationsverbindung zu diesem Teilnehmerendgerät TE1 vom Multicast in den Unicast (siehe Schritt S4).

Anschließend wird eine Kommunikationsverbindung zwischen der Türsprechanlage TS und dem aktivierten Teilnehmerendgerät TE1 der von der Türsprechanlage TS adressierten Teilnehmergruppe TG im Unicast etabliert (siehe Schritt S5). Hier werden zwischen dem Teilnehmerendgerät TE1 und der Türsprechanlage TS Video- und/oder Audiodaten, beispielsweise Sprachdaten in Kombination mit den entsprechenden Bildsequenzen der von der Türsprechanlage aufgenommenen Kamera bzw. der entsprechenden Kamera innerhalb des Teilnehmerendgerätes TE1, ausgetauscht. Die übrigen Teilnehmerendgeräte TE2 derselben Teilnehmergruppe TG und darüber hinaus auch die Teilnehmerendgeräte anderer Teilnehmergruppen erhalten keinerlei Information von dieser Datenkommunikation im Schritt S5, so dass hier eine effektive Mitseh- und auch Mithörsperre implementiert ist.

Zusätzlich wäre allerdings auch denkbar, dass die übrigen Teilnehmerendgeräte TE2 derselben Teilnehmergruppe zwar nicht an der Datenkommunikation zwischen der Türsprechanlage und dem Teilnehmerendgerät TE1 aktiv teilnehmen können, jedoch mithören bzw. eventuell auch mitsehen können. Dies ist mit dem gestrichelten Schritt S6 angedeutet. In diesem Fall würden von der Türsprechanlage TS an das Teilnehmerendgerät TE1 gesendete Daten zugleich auch an das Teilnehmerendgerät TE2 derselben Teilnehmergruppe gesendet werden, wobei das Teilnehmerendgerät TE2 aber nicht berechtigt ist, an der Datenkommunikation aktiv teilzunehmen. Es erfolgt hier lediglich ein Mithören und Mitsehen. Allerdings wird diese Funktionalität von den Nutzern solcher Telekommunikationsanlagen und insbesondere von Nutzern von Hauskommunikationsanlagen aus Vertraulichkeitsgründen und im Sinne des Erhalts der Privatsphäre meist nicht gewünscht.

In einer besonders typischen und vorteilhaften Ausgestaltung werden unmittelbar mit dem Schritt S1 sämtliche passiven audiovisuellen Kommunikationsverbindungen von anderen Teilnehmergruppen, die von dem Türsprechanlage TS im Schritt S1 nicht angesprochen werden, unterbrochen. Dadurch wird die Privatsphäre und Vertraulichkeit eines die Türsprechanlage TS benutzenden Besuchers sowie der von diesem Besucher angesprochenen Teilnehmergruppe gewährleistet.

Obwohl die vorliegende Erfindung vorstehend anhand bevorzugter Ausführungsbeispiele beschrieben wurde, sei sie nicht darauf beschränkt, sondern lässt sich auf mannigfaltige Art und Weise modifizieren.

Es versteht sich von selbst, dass die oben anhand der Figur 1 dargestellte Architektur einer Hauskommunikationsanlage lediglich beispielhaft zu verstehen ist und nicht dahingehend beschränkt sein soll. Vielmehr wäre auch denkbar, eine beliebig andere Architektur, beispielsweise durch eine andere, ggfs. komplexere Verzweigung des Busnetzwerks, zusätzliche Teilnehmerendgeräte und dergleichen, vorzusehen.

Auch das anhand von Fig. 2 dargestellte Verfahren kann beliebig ergänzt, verfeinert, abgewandelt oder modifiziert werden, sofern sichergestellt ist, dass im Schritt S4 eine zusätzliche Information, wie etwa ein Betreff oder ein Zweck des Anrufs, an den Zielteilnehmer mit übermittelt wird.

Sofern nichts Anderes angegeben ist, wird in der vorliegenden Patentanmeldung das Endgerät, welches z.B. durch Drücken einer Klingel eine Rufanfrage startet, als Rufteilnehmer bezeichnet. Die Rufanfrage bezeichnet allgemein eine z.B. durch Klingeln initiierte Anfrage an eine Teilnehmergruppe oder ein einzelnes Teilnehmerendgerät. Diejenigen Endgeräte der Hauskommunikationsanlage, die durch die Rufanfrage angesprochen werden sollen, werden allgemein als Teilnehmerendgeräte, angesprochene oder adressierte Teilnehmerendgeräte bezeichnet. Die Gesamtheit dieser Teilnehmerendgeräte wird als angesprochene oder adressierte Teilnehmergruppe bezeichnet. Das Teilnehmerendgerät, welches zum Beispiel durch Abnehmen des Hörers oder durch Drücken der Freigabetaste die Rufanfrage entgegennimmt, wird als erstes Teilnehmerendgerät bezeichnet.

### Bezugszeichenliste

- 10: Hauskommunikationsanlage
- 11: Teilnehmerendgerät
- 12: Verbindung
- 13: Router, Switch
- 14: Verbindung
- 15: zentrale Steuereinrichtung
- 16, 16', 16'': Cluster, Teilnehmergruppe
- 17: Router, Switch
- 18: Türsprechanlage, Teilnehmerendgerät
- S1 - S6: Schritte
- SE: Steuereinrichtung
- TE1, TE2: Teilnehmerendgeräte
- TS: Türsprechanlage
- TG: adressierte Teilnehmergruppe

## Patentansprüche

1. Kommunikationsverfahren für eine Telekommunikationsanlage (10), insbesondere für eine Hauskommunikationsanlage (10), welche einen Rufteilnehmer (TS) und eine Vielzahl voneinander unabhängiger Teilnehmergruppen (TG) mit zumindest einem Teilnehmerendgerät (11; TE1, TE2), die untereinander über eine Steuereinrichtung (SE) verbunden sind, aufweist, mit den Schritten:
Senden einer an eine Teilnehmergruppe (TG) gerichtete Rufanfrage durch den Rufteilnehmer (TS);
Weiterleiten der Rufanfrage von der Steuereinrichtung (SE) an die Teilnehmerendgeräte (TE1, TE2) der angesprochenen Teilnehmergruppe (TG) in Form einer IP-adressbasierten Rufanfrage;
Aufbauen einer mitsehgeschützten Kommunikationsverbindung zwischen dem Rufteilnehmer (TS) und einem ersten Teilnehmerendgerät (TE1) der adressierten Teilnehmergruppe (TG), welches die Rufanfrage angenommen hat, **dadurch gekennzeichnet,**
**dass** eine aktive Mitsehsperre vorgesehen ist, bei der das Aufbauen einer mitsehgeschützten Kommunikationsverbindung durch Vergabe einer neuen IP-Adresse, die dem ersten Teilnehmerendgerät (TE1) und/oder der adressierten Teilnehmergruppe (TG) zugeteilt wird, erfolgt.

2. Verfahren nach Anspruch 1,
**dadurch gekennzeichnet,**
**dass** die Teilnehmerendgeräte (TE1, TE2) und/oder die Teilnehmergruppe (TG) jeweils eine dem jeweiligen Teilnehmerendgerät (TE1, TE2) bzw. der jeweiligen Teilnehmergruppe (TG) zugeordnete IP-Adresse aufweisen.

3. Verfahren nach einem der vorherigen Ansprüche,
**dadurch gekennzeichnet,**
**dass** das Senden der Rufanfrage durch den Rufteilnehmer (TS) im Unicast-Betrieb oder im Multicast-Betrieb erfolgt.

4. Verfahren nach einem der vorherigen Ansprüche,
**dadurch gekennzeichnet,**
**dass** das Weiterleiten der Rufanfrage von der Steuereinrichtung (SE) an die Teilnehmerendgeräte (TE1, TE2) der adressierten Teilnehmergruppe (TG) im Multicast-Betrieb erfolgt.

5. Verfahren nach einem der vorherigen Ansprüche,
**dadurch gekennzeichnet,**
**dass** eine implizite Mitsehsperre vorgesehen ist, bei der das Aufbauen einer mitsehgeschützten Kommunikationsverbindung zwischen dem Rufteilnehmer (TS) und dem ersten Teilnehmerendgerät (TE1) der adressierten Teilnehmergruppe (TG) ein gleichzeitiges Umschalten der zwischen dem Rufteilnehmer (TS) und dem ersten Teilnehmerendgerät (TE1) aufgebauten Kommunikationsverbindung vom Multicast-Betrieb in den Unicast-Betrieb umfasst.

6. Verfahren nach einem der vorherigen Ansprüche,
**dadurch gekennzeichnet,**
**dass** die Kommunikationsverbindung stets im Unicast vorhanden ist, sofern das erste Teilnehmerendgerät (TE1) der adressierten Teilnehmergruppe (TG) eine Türsprechanlage (TS) ist.

7. Verfahren nach einem der vorherigen Ansprüche,
**dadurch gekennzeichnet,**
**dass** gleichzeitig oder nach dem Aufbauen der Kommunikationsverbindung zwischen dem Rufteilnehmer (TS) und dem ersten Teilnehmerendgerät (TE1) zumindest eine weitere Kommunikationsverbindung zwischen zumindest dem Rufteilnehmer (TS) und einem anderen Teilnehmerendgerät (TE2) derselben adressierten Teilnehmergruppe (TG) aufgebaut wird, welche lediglich in einem Empfangsmodus betrieben wird.

8. Verfahren nach einem der vorherigen Ansprüche,
**dadurch gekennzeichnet,**
**dass** nach dem Aufbauen der Kommunikationsverbindung zwischen dem Rufteilnehmer (TS) und dem ersten Teilnehmerendgerät (TE1) weitere Kommunikationsverbindungen zwischen dem Rufteilnehmer (TS) mit anderen Teilnehmerendgeräten (TE2) derselben oder anderer Teilnehmergruppen (TG) geblockt werden.

9. Verfahren nach einem der vorherigen Ansprüche,
**dadurch gekennzeichnet,**
**dass** die Rufanfrage eine akustische und/oder visuelle Rufanfrage ist.

10. Hauskommunikationsanlage (10), welche dazu ausgelegt ist, ein Verfahren nach einem der Ansprüche 1 bis 9 auszuführen,
mit einer Vielzahl voneinander unabhängiger Teilnehmergruppen (TG), welche jeweils zumindest ein Teilnehmerendgerät (11, 18; TE1, TE2, TS) aufweisen, wobei zumindest ein Teilnehmerendgerät (18; TS) dazu ausgebildet ist, als Rufteilnehmer (TS) betrieben zu werden,
mit einer zentralen Steuereinrichtung (SE) zur Steuerung der Kommunikation zwischen den Teilnehmerendgeräten (11, 18; TE1, TE2, TS),
mit einem Kommunikationsnetzwerk (12, 13, 14, 17), über welches die Teilnehmerendgeräte (11, 18; TE1, TE2, TS) miteinander und mit der zentralen Steuereinrichtung (SE) gekoppelt sind;
**dadurch gekennzeichnet,**
**dass** die Steuereinrichtung dazu ausgebildet ist, eine aktive Mitsehsperre dadurch vorzusehen, dass beim Aufbauen einer mitsehgeschützten Kommunikationsverbindung eine Vergabe einer neuen IP-Adresse, die dem ersten Teilnehmerendgerät (TE1) und/oder der adressierten Teilnehmergruppe (TG) zugeteilt wird, erfolgt.

11. Hauskommunikationsanlage nach Anspruch 10,
**dadurch gekennzeichnet,**
**dass** zumindest ein Teilnehmerendgerät (11, 18; TE1, TE2,
TS) als Haustelefon, insbesondere Video-Haustelefon, als Sprechanlage (18, TS), insbesondere VideoFreisprechanlage, Etagentürsprechanlage, und/oder als virtuelles Video-Haustelefon ausgebildet ist.

12. Hauskommunikationsanlage nach einem der Ansprüche 10 oder 11,
**dadurch gekennzeichnet,**
**dass** der Rufteilnehmer (TS) eine Türsprechanlage (TS) ist.

13. Hauskommunikationsanlage nach einem der Ansprüche 10 bis 12,
**dadurch gekennzeichnet,**
**dass** das Kommunikationsnetzwerk als WLAN-Netzwerk und/oder WAN-Netzwerk und/oder MAN-Netzwerk und/oder LAN-Netzwerk ausgebildet ist.

## Claims

1. Communication method for a telecommunication system (10), in particular for a household communication system (10), which comprises a call subscriber (TS) and a plurality of mutually independent subscriber groups (TG) having at least one subscriber terminal (11; TE1, TE2) which are interconnected via a control device (SE), comprising the steps of:
- the call subscriber (TS) sending a call request directed to a subscriber group (TG);
- passing on the call request from the control device (SE) to the subscriber terminals (TE1, TE2) of the addressed subscriber group (TG) in the form of an IP-address-based call request;
- establishing a privacy-protected communication connection between the call subscriber (TS) and a first subscriber terminal (TE1) of the addressed subscriber group (TF) which has received the call request,
**characterised in that**
an active privacy block is provided whereby a privacy-protected communication connection is established by assigning a new IP address which is allocated to the first subscriber terminal (TE1) and/or to the addressed subscriber group (TG).

2. Method according to claim 1,
**characterised in that**
the subscriber terminals (TE1, TE2) and/or the subscriber group (TG) each comprise an IP address associated with the respective subscriber terminal (TE1, TE2) or the respective subscriber group (TG).

3. Method according to either of the preceding claims,
**characterised in that**
the call request is sent by the call subscriber (TS) in unicast or multicast operation.

4. Method according to any of the preceding claims,
**characterised in that**
the call request is passed on from the control device (SE) to the subscriber terminal (TE1, TE2) of the addressed subscriber group (TG) in multicast operation.

5. Method according to any of the preceding claims,
**characterised in that**
an implicit privacy block is provided whereby establishing a privacy-protected communication connection between the call subscriber (TS) and the first subscriber terminal (TE1) of the addressed subscriber group (TG) comprises simultaneously switching the communication connection established between the call subscriber (TS) and the first subscriber terminal (TE1) from multicast operation to unicast operation.

6. Method according to any of the preceding claims,
**characterised in that**
the communication connection is always provided in unicast if the first subscriber terminal (TE1) of the addressed subscriber group (TG) is a door intercom system (TS).

7. Method according to any of the preceding claim,
**characterised in that**
simultaneously or after the communication connection is established between the call subscriber (TS) and the first subscriber terminal (TE1), at least one further communication connection is established between at least the call subscriber (TS) and another subscriber terminal (TE2) of the same addressed subscriber group (TG), which is only operated in a receiving mode.

8. Method according to any of the preceding claims,
**characterised in that**
after the communication connection is established between the call subscriber (TS) and the first subscriber terminal (TE1), further communication connections between the call subscriber (TS) and other subscriber terminals (TE2) of the same or a different subscriber group (TG) are blocked.

9. Method according to any of the preceding claims,
**characterised in that**
the call request is an acoustic and/or visual call request.

10. Household communication system (10), which is configured to carry out a method according to any of claims 1 to 9, comprising a plurality of mutually independent subscriber groups (TG), which each comprise at least one subscriber terminal (11, 18; TE1, TE2, TS), at least one subscriber terminal (18; TS) being formed to be operated as a call subscriber (TS),
comprising a central control device (SE) for controlling the communication between the subscriber terminals (11, 18; TE1, TE2, TS),
comprising a communication network (12, 13, 14, 17), via which the subscriber terminals (11, 18; TE1, TE2, TS) are coupled to one another and to the central control device (SE);
**characterised in that**
the control device is formed so as to provide an active privacy block **in that** when a privacy-protected communication connection is established a new IP address is assigned and is allocated to the first subscriber terminal (TE1) and/or to the addressed subscriber group (TG).

11. Household communication system (10) according to claim 10,
**characterised in that**
at least one subscriber terminal (11, 18; TE1, TE2, TS) is formed as a house telephone, in particular a house videophone, as an intercom system (18, TS), in particular a hands-free video system, a door intercom system for a block of flats, and/or as a virtual house videophone.

12. Household communication system according to either claim 10 or claim 11,
**characterised in that**
the call subscriber (TS) is a door intercom system (TS).

13. Household communication system according to any of claims 10 to 12,
**characterised in that**
the communication network is formed as a WLAN and/or WAN and/or MAN and/or LAN.

## Revendications

1. Procédé de communication pour une installation de télécommunication (10), en particulier pour une installation de communication domestique (10), qui présente un abonné appelant (TS) et une multitude de groupes d'abonnés (TG) indépendants entre eux avec au moins un terminal d'abonné (11 ; TE1, TE2), qui sont raccordés entre eux via un dispositif de commande (SE), comportant les étapes consistant à :
- envoyer une demande d'appel adressée à un groupe d'abonnés (TG) par l'abonné appelant (TS) ;
- transmettre la demande d'appel du dispositif de commande (SE) aux terminaux d'abonnés (TE1, TE2) du groupe d'abonnés (TG) concerné sous la forme d'une demande d'appel basée sur l'adresse IP ;
- établir une liaison de communication entre l'abonné appelant (TS) protégée par le secret de vision et un premier terminal d'abonné (TE1) du groupe d'abonnés adressé (TG), qui a accepté la demande d'appel,
**caractérisé par le fait qu'**un secret de vision actif est prévu, pour lequel l'établissement d'une liaison de communication protégée par le secret de vision est effectué par l'octroi d'une nouvelle adresse IP, qui est attribuée au premier terminal abonné (TE1) et/ou au groupe d'abonnés adressé (TG).

2. Procédé selon la revendication 1, **caractérisé par le fait que** les terminaux abonnés (TE1, TE2) et/ou le groupe d'abonnés (TG) présentent respectivement une adresse IP associée au terminal abonné (TE1, TE2) respectif ou au groupe d'abonnés (TG) respectif.

3. Procédé selon l'une quelconque des revendications précédentes, **caractérisé par le fait que** l'envoi de la demande d'appel est effectué par l'abonné appelant (TS) en mode Unicast ou en mode Multicast.

4. Procédé selon l'une quelconque des revendications précédentes, **caractérisé par le fait que** la transmission de la demande d'appel du dispositif de commande (SE) aux terminaux d'abonnés (TE1, TE2) du groupe d'abonnés adressé (TG) est effectuée en mode Multicast.

5. Procédé selon l'une quelconque des revendications précédentes, **caractérisé par le fait qu'**un secret de vision implicite est prévu, pour lequel l'établissement d'une liaison de communication protégée par le secret de vision entre l'abonné appelant (TS) et le premier terminal d'abonné (TE1) du groupe d'abonnés adressé (TG) comprend une commutation simultanée de la liaison de communication établie entre l'abonné appelant (TS) et le premier terminal d'abonné (TE1) du mode Multicast au mode Unicast.

6. Procédé selon l'une quelconque des revendications précédentes, **caractérisé par le fait que** la liaison de communication est toujours disponible en Unicast, dans la mesure où le premier terminal abonné (TE1) du groupe d'abonnés adressé (TG) est un interphone portier (TS).

7. Procédé selon l'une quelconque des revendications précédentes, **caractérisé par le fait que**, en même temps que ou après l'établissement de la liaison de communication entre l'abonné appelant (TS) et le premier terminal abonné (TE1), au moins une autre liaison de communication est établie entre au moins l'abonné appelant (TS) et un autre terminal d'abonné (TE2) du même groupe d'abonnés (TG), qui est seulement effectuée dans un mode de réception.

8. Procédé selon l'une quelconque des revendications précédentes, **caractérisé par le fait que**, après l'établissement de la liaison de communication entre l'abonné appelant (TS) et le premier terminal abonné (TE1), d'autres liaisons de communication entre l'abonné appelant (TS) avec d'autres terminaux d'abonnés (TE2) des mêmes ou d'autres groupes d'abonnés (TG) sont bloquées.

9. Procédé selon l'une quelconque des revendications précédentes, **caractérisé par le fait que** la demande d'appel est une demande d'appel sonore et/ou visuelle.

10. Installation de communication domestique (10), qui est conçue pour réaliser un procédé selon l'une des revendications 1 à 9, comportant une multitude de groupes d'abonnés (TG) indépendants entre eux, qui présentent respectivement au moins un terminal d'abonné (11, 18 ; TE1, TE2, TS), au moins un terminal d'abonné (18 ; TS) étant réalisé de manière à être exploité en tant qu'abonné appelant (TS), comportant un dispositif de commande central (SE) pour la commande de la communication entre les terminaux d'abonnés (11, 18 ; TE1, TE2, TS), comportant un réseau de communication (12, 13, 14, 17), par l'intermédiaire duquel les terminaux d'abonnés (11, 18 ; TE1, TE2, TS) sont accouplés entre eux et avec le dispositif de commande central (SE) ;
**caractérisée par le fait que** le dispositif de commande est réalisé pour prévoir un secret de vision actif de telle façon que, pour l'établissement d'une liaison de communication protégée par le secret de vision, l'octroi d'une nouvelle adresse IP, qui est attribuée au premier terminal abonné (TE1) et/ou au groupe d'abonnés adressé (TG), est effectué.

11. Installation de communication domestique selon la revendication 10, **caractérisée par le fait qu'**au moins un terminal d'abonné (11, 18 ; TE1, TE2, TS) a la forme d'un téléphone domestique, en particulier un téléphone domestique vidéo, d'un interphone (18, TS), en particulier un interphone vidéo mains libres, un interphone de porte palière, et/ou d'un téléphone domestique vidéo virtuel.

12. Installation de communication domestique selon l'une des revendications 10 ou 11, **caractérisée par le fait que** l'abonné appelant (TS) est un interphone portier (TS).

13. Installation de communication domestique selon l'une des revendications 10 à 12, **caractérisée par le fait que** le réseau de communication est réalisé en tant que réseau local sans fil et/ou réseau étendu et/ou métropolitain et/ou local.
